(19)

**Europäisches Patentamt**
**European Patent Office**
**Office européen des brevets**

(11) **EP 4 764 965 A1**

(12) **EUROPEAN PATENT APPLICATION**

(43) Date of publication:
24.06.2026   Bulletin 2026/26

(21) Application number: 25201706.6

(22) Date of filing: 11.09.2025

(51) International Patent Classification (IPC):
*G06N 5/022* (2023.01)   *G06N 5/04* (2023.01)
*G06N 20/00* (2019.01)

(52) Cooperative Patent Classification (CPC):
**G06N 5/022; G06N 5/04; G06N 20/00;** G06N 3/045;
G06N 3/092; G06N 7/01

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024   KR 20240193116

(71) Applicant: Samsung Electronics Co., Ltd.
Suwon-si, Gyeonggi-do 16677 (KR)

(72) Inventors:
• NA, Joohan
16678 Suwon-Si (KR)

• KYUNG, Kyehyun
16678 Suwon-Si (KR)
• KOO, Jahoo
16678 Suwon-Si (KR)
• LEE, Dongwook
16678 Suwon-Si (KR)
• JANG, Sujin
16678 Suwon-Si (KR)
• JI, Dae Hyun
16678 Suwon-Si (KR)

(74) Representative: Arnold & Siedsma
Bezuidenhoutseweg 57
2594 AC The Hague (NL)

(54) **METHOD AND DEVICE WITH ROBOT CONTROL**

(57)    A method of controlling a companion robot includes receiving a multi-modal input signal from a user, extracting at least one feature vector from the multi-modal input signal using a universal encoder that maps information on different modalities to the same feature space, retrieving a knowledge database, DB, including a plurality of knowledge graphs based on the at least one feature vector, wherein the plurality of knowledge graphs includes at least one knowledge graph that accumulates experience data related to the user, inferring a causality vector for determining an action of the companion robot based on the at least one feature vector and a retrieval result of the knowledge DB, generating at least one sub-graph corresponding to the at least one knowledge graph based on the causality vector, and updating the at least one knowledge graph based on the generated at least one sub-graph.

FIG. 4

## Description

BACKGROUND

1. Field

The following description relates to a method and device with robot control.

2. Description of Related Art

With shifts in social structure, the elderly population is growing, and single-person households or nuclear families are becoming more prevalent. As a result, there is an increasing demand for both physical and emotional interactions. To address this need, various robotic devices are being developed to observe users' surroundings, facilitate interaction, and enhance convenience. In particular, companion robots are evolving with the goal of fostering emotional connections with users.

Companion robots may respond to diverse environments and situations, recognize user requests, and progressively refine their interaction patterns through ongoing relationships with users. In this process, the companion robots may be designed to cultivate long-term relationships, offering personalized experiences and fostering a stable and fulfilling communication experience for users.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

It is an objective of the invention to provide an improvement over conventional robot control systems, optionally for a companion robot, that react to single-modality inputs or rely on static data stores.

It is another or alternative objective of the invention to provide integrated multi-modal encoding with causal inference.

It is another or alternative objective of the invention to provide dynamic knowledge graph generation and refinement.

It is another or alternative objective of the invention to provide memory lifecycle management.

It is another or alternative objective of the invention to provide cross-robot knowledge transfer.

It is another or alternative objective of the invention to provide improved intent recognition accuracy.

It is another or alternative objective of the invention to provide responsive and personalized control.

It is another or alternative objective of the invention to provide resource-efficient memory management.

It is another or alternative objective of the invention to provide continuity across devices.

It is another or alternative objective of the invention to provide hybrid on-device and/or server execution.

In an aspect, the invention provides for a processor-implemented method that includes receiving a multi-modal input signal from a user; extracting, using a universal encoder, at least one feature vector from the multi-modal input signal, wherein the universal encoder maps information on different modalities to a same feature space; retrieving a knowledge database, DB, comprising a plurality of knowledge graphs based on the at least one feature vector, wherein the plurality of knowledge graphs comprises at least one knowledge graph that accumulates experience data associated with the user; inferring a causality vector for determining an action of a companion robot based on the at least one feature vector and a retrieval result of the knowledge DB; generating at least one sub-graph corresponding to the at least one knowledge graph based on the causality vector; and updating the at least one knowledge graph based on the generated at least one sub-graph.

The method may further include managing retrieval history information of nodes included in the plurality of knowledge graphs within the knowledge DB.

The method may further include extracting at least one of a forgetting sub-graph or a long-term memory sub-graph from the plurality of knowledge graphs based on the retrieval history information.

The method may further include updating a parameter of a causality vector inference model based on the long-term memory sub-graph.

The method may further include reducing a storage space corresponding to the forgetting sub-graph and the long-term memory sub-graph in the knowledge DB.

The generating of the at least one sub-graph may include outputting an action control signal for the companion robot based on the causality vector.

The generating of the at least one sub-graph may include receiving a user feedback related to the action performed by the companion robot; and generating the least one sub-graph based on the user feedback.

The method may further include updating a parameter of a causality vector inference model based on the user feedback.

The updating of the at least one knowledge graph may include integrating relationships between specific sub-graphs within the plurality of knowledge graphs, and updating a connection structure of nodes mutually referred among the specific sub-graphs.

The extracting of the at least one feature vector may include tokenizing each modality included in the multi-modal input signal to generate tokenized inputs.

The extracting of the at least one feature vector may further include applying weights to the tokenized inputs based on correlations and reliability among the tokenized inputs.

The retrieving of the knowledge DB may include matching a corresponding sub-graph to the at least one feature vector using a category index assigned to each sub-graph of the plurality of knowledge graphs.

The inferring of the causality vector may include analyzing a spatiotemporal relationship between the at least one feature vector and a specific event extracted from the retrieval result of the knowledge DB, and a relationship with the user, using a causality vector inference model.

The updating of the at least one knowledge graph may include dynamically assigning the generated at least one sub-graph to the at least one knowledge graph based on at least one of an attribute of a node within the generated sub-graph or the causality vector.

The method may further include, in response to a request from the user, receiving one or more knowledge graphs formed by another companion robot, and fusing the plurality of knowledge graphs with the one or more knowledge graphs.

The fusing of the plurality of knowledge graphs with the one or more knowledge graphs may include reflecting a node or a connection structure corresponding to an interaction history with the user, included in the one or more knowledge graphs of the other companion robot, to the plurality of knowledge graphs.

The reflecting of the node or the connection structure to the plurality of knowledge graphs may include reflecting the node or the connection structure as past knowledge within the plurality of knowledge graphs.

The retrieving of the knowledge DB may include deriving an initial causality vector from the feature vector using a causal world model, and narrowing a retrieval scope of the knowledge DB based on the initial causality vector.

In another aspect, the invention provides for a non-transitory computer-readable storage medium storing code that, when executed by one or more processors, configures the one or more processors to perform the method herein.

In another aspect, the invention provides for a companion robot that includes one or more processors; and a memory storing code and data related to a plurality of knowledge graphs, including a knowledge graph that accumulates experience data associated with a user; wherein the code, when executed by the one or more processors, configures the one or more processors to: receive a multi-modal input signal from the user; extract at least one feature vector from the multi-modal input signal using a universal encoder that maps information on different modalities to a same feature space; retrieve, from the memory, a knowledge database (DB) comprising the plurality of knowledge graphs based on the at least one feature vector; infer, using a causal world model, a causality vector for determining an action of the companion robot based on the at least one feature vector and a retrieval result of the knowledge DB; generate at least one sub-graph corresponding to at least one of the plurality of knowledge graphs based on the causality vector; and update the at least one of the plurality of knowledge graphs based on the generated at least one sub-graph.

In another aspect, the invention provides for a companion robot that is communicatively coupled to a server and include a memory storing code and data related to a plurality of knowledge graphs comprising a knowledge graph that accumulates experience data associated with a user; and one or more processors, wherein the code, in response to being executed by the one or more processors, configures the companion robot to: receive a multi-modal input signal from the user; extract at least one feature vector from the multi-modal input signal using a universal encoder that maps information on different modalities to a same feature space; retrieve, from the memory, a knowledge database (DB) comprising the plurality of knowledge graphs based on the at least one feature vector; transmit the at least one feature vector and the knowledge DB to the server; receive, from the server, a causality vector for determining an action of the companion robot; generate at least one sub-graph corresponding to at least one of the plurality of knowledge graphs included in the knowledge DB based on the causality vector; and update the at least one of the plurality of knowledge graphs based on the generated at least one sub-graph.

Other features and aspects will be apparent from the following detailed description, the drawings, and the claims.

BRIEF DESCRIPTION OF THE DRAWINGS

FIG. 1 illustrates an example companion robot according to one or more embodiments.

FIGS. 2 and 3 illustrate respective example methods of controlling a companion robot according to one or more embodiments.

FIG. 4 illustrates an example operation of a companion robot according to one or more embodiments.

FIG. 5 illustrates an example universal encoder according to one or more embodiments.

FIG. 6 illustrates an example operation of receiving a knowledge graph from another companion robot according to one or more embodiments.

FIG. 7 illustrates an example electronic device according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Throughout the specification, when a component, element, or layer is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

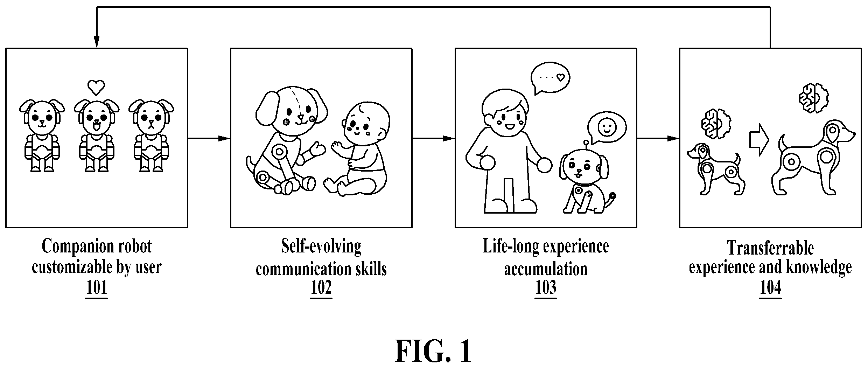

FIG. 1 illustrates an example companion robot according to one or more embodiments.

In one or more embodiments, the companion robot may assist a user in daily activities and interact with the user through emotional empathy. Unlike conventional automated robots, the companion robot is designed to learn the user's personality, actions, and surrounding environment, evolving over an extended period of time. Examples of companion robots may include, but are not limited to, healthcare robots, educational robots, social robots, and pet robots.

Among companion robots, pet robots, in particular, focus on emotional communication and may serve as a friend or companion to the user. Through continuous interaction, the companion robot may learn new experiences and provide ongoing services by accumulating and analyzing user interactions.

Referring FIG. 1, at 101, a user may initially assign a customizable default personality to the companion robot. For example, as shown in 101, the user may select one or more personalities from various personalities such as "obedient," "playful," and "lively." The process of assigning/selecting personality may be performed simply through a selection input by the user, and the characteristics of the robot may also be generated naturally over time based on the robot's accumulated experiences with the user.

At 102 of FIG. 1, the companion robot may develop self-evolving communication skills by interacting with the user in accordance with the set/assigned/selected personality. For example, as shown in 102, the robot may interpret user commands and/or express emotions through verbal and nonverbal communication with the user. The robot may collect and analyze multi-modal input data, including verbal elements (e.g., voice) and nonverbal elements (e.g., gesture and/or touch), to determine and execute appropriate actions/responses based on the situation.

At 103 of FIG. 1, the companion robot may accumulate life-long experiences during its interactions with the user. As shown in 103, the robot may detect an action and environment of the user and store data generated based on the action and the environment in the form of a knowledge graph. As further described below, a knowledge graph may store causal relationship(s) between events, enabling the robot to provide customized responses that reflect the user's personalities or behavioral patterns.

At 104 of FIG. 1, the accumulated experience and knowledge of the companion robot may be transferred to another robot. For example, as shown in 104, a knowledge graph collected by one companion robot may be transferred to another robot, allowing a new robot to provide services tailored to the user's preferences without requiring an initial setup process. This knowledge transfer process ensures that the user may experience continuous and consistent interactions, even when transitioning to a new companion robot.

In this configuration, the companion robot may continuously accumulate and refine its user interactions through initial user settings, interactive training, experience accumulation, and knowledge transfer. To achieve this, the companion robot may be trained to establish a causal relationship using multi-modal data, store knowledge graphs, and deliver customized experiences based on the user's personality.

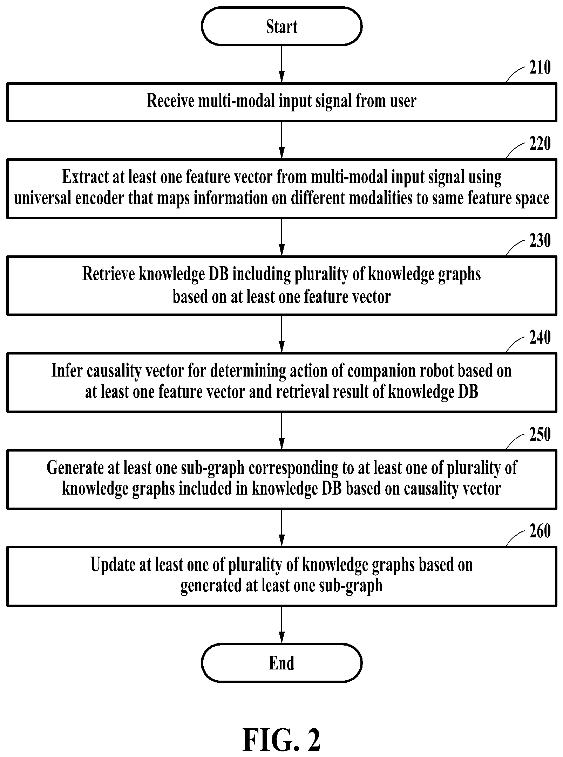

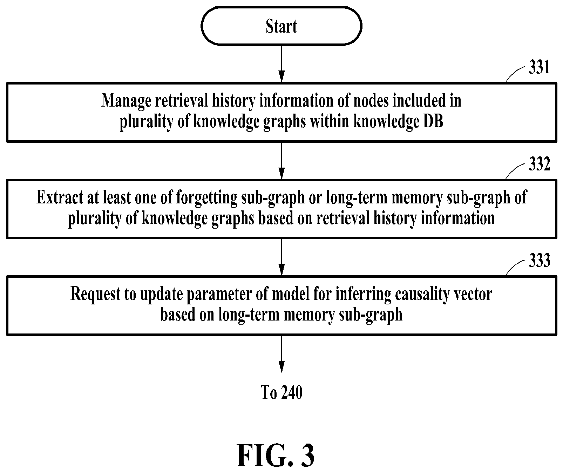

FIGS. 2 and 3 illustrate an example method of controlling a companion robot according to one or more embodiments.

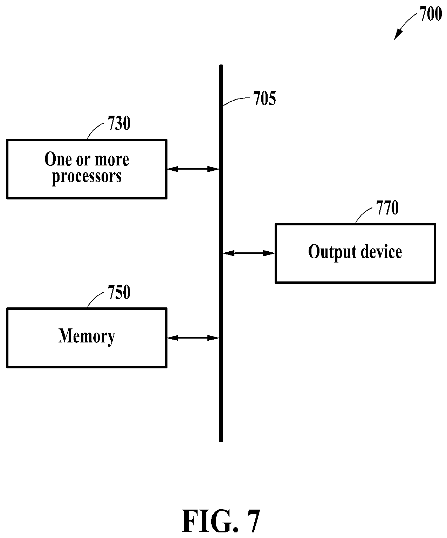

For convenience of description, operations 210 to 260 and 331 to 333 are described in relation to an electronic device 700, as shown in FIG. 7. However, operations 210 to 260 and 331 to 333 may also be performed by another suitable electronic device in an appropriate system.

The operations of FIG. 2 may be performed sequentially as shown. However, the order of certain operations may be modified or omitted without departing from the spirit and scope of the shown example. The operations depicted in FIGS. 2 and 3 may be performed in parallel or simultaneously. Hereinafter, the electronic device 700 may be referred to as a companion robot 400.

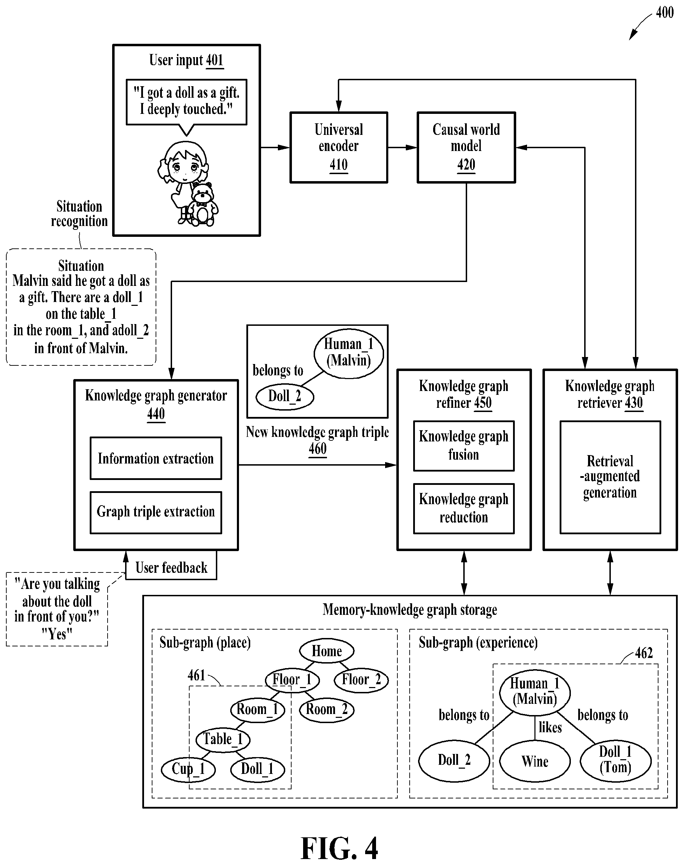

Operations 210 to 260 and 331 to 333 are described with reference to FIG. 4.

In operation 210, the companion robot 400 may receive a multi-modal input signal from a user.

For example, the companion robot 400 may detect the multi-modal input signal through various sensors. For example, a voice sensor may detect/capture a voice command or a dialogue content of the user, and an image sensor may visually recognize a facial expression, a gesture, and a surrounding situation of the user. In addition, a touch sensor may detect physical interactions, such as an action of the user touching the robot or petting a specific part of the robot.

The multi-modal input signal may include data of different modalities, such as auditory, visual, and tactile inputs. For example, when a user instructs the robot to "Bring the ball" while pointing in a specific direction, the companion robot 400 may simultaneously process a voice command (via a voice sensor) and a finger gesture (via an image sensor). By combining multi-modal input signals, the companion robot 400 may accurately determine the user's intent.

Also, the multi-modal input signals may be detected in real time, allowing the robot to analyze various sensor data for precise situation recognition. For example, when the user pets the robot and says, "Good job," the companion robot 400 may interpret this interaction as a positive interaction by correlating touch data with the verbal command.

In operation 220, the companion robot 400 may extract at least one feature vector from the multi-modal input signal using a universal encoder, which maps information on different modalities to the same feature space.

The companion robot 400 may tokenize each of modality inputs included in the multi-modal input signal. For example, a user command detected/captured by the voice sensor may be transformed/converted into a voice token, while a finger gesture (e.g., a finger direction) or a facial expression detected by the image sensor may be transformed/converted into an image token. In addition, the touch data detected by the touch sensor may be transformed into a touch token.

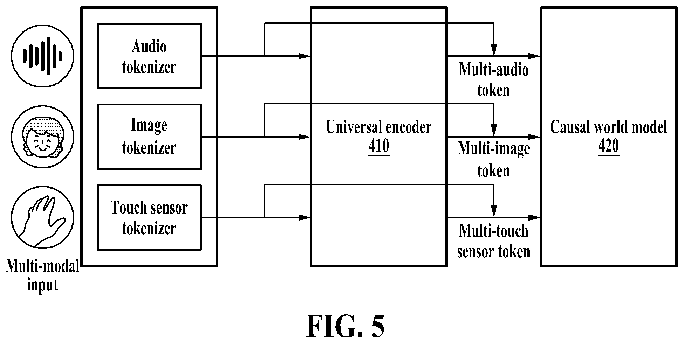

The companion robot 400 may assign weights to these tokens based on their correlation or reliability. Instead of processing each token independently, the robot may analyze their interdependencies. For example, when a clear petting gesture is detected simultaneously with a quiet voice command of the user, the reliability of the image token may be weighted higher. The universal encoder will be further described in detail with reference to FIG. 5.

In operation 230, the companion robot 400 may retrieve/access a knowledge database (DB) including a plurality of knowledge graphs based on the extracted feature vector. The plurality of knowledge graphs may include a knowledge graph that accumulates experience data related to the user.

The companion robot 400 may match a sub-graph corresponding to the extracted feature vector using a category index assigned to each of sub-graphs of the plurality of knowledge graphs.

The companion robot 400 may derive an initial causality vector by inputting the extracted feature vector into a causal world model. This initial causality vector is utilized to specify and narrow the range of sub-graph retrieval within the knowledge DB. The companion robot 400 then retrieves, as a retrieval result, the most relevant sub-graph corresponding to both the feature vector and the initial causality vector. As used herein, the term 'retrieval result' refers to the most relevant sub-graph retrieved from the knowledge DB. This retrieval is guided by both the feature vector and an initial causality vector derived from the feature vector via the causal world model, enabling refined and context-aware sub-graph selection. Here, a sub-graph represents a specific situation or topic, where related objects and relationships may be expressed as nodes and connection structures (or edges). These sub-graphs may be hierarchically structured, linking from higher-level concepts to lower-level concepts and may be classified by category. The companion robot 400 may input the feature vector to a model (e.g., a causal world model) that derives a causality vector to infer a causal relationship for the situation, and specify the range of the sub-graph to be retrieved based on the derived causality vector.

The causal world model may analyze the input feature vector, and generate the causality vector that reflects the causality for the situation. For example, when the user says, "Throw me the ball" while pointing in a specific direction, the feature vector may be transmitted to the causal world model. The causal world model may infer the causal relationship for a "ball throwing action" by comprehensively analyzing a language (a voice vector), a gesture (an image vector), and a context (a previous interaction/experience) of the user. The inferred causality vector has a high correlation with the sub-graph related to "play with the user," and may narrow the range of the knowledge DB retrieval to match the sub-graph.

In addition, the causal world model may also generate situation information including text-based situation recognition outputs based on the causality vector. At this stage, the causal world model may transform the inferred causality into a text form and output the causality using a model such as a large language model (LLM).

The category index may classify sub-graphs by topic or situation. For example, the companion robot 400 may assign category indices such as "place," "experience," and "user emotion" to the sub-graphs within the knowledge graphs. The companion robot 400 may retrieve the most relevant sub-graph by comparing the feature vector or causality vector with the category index.

For example, a place sub-graph may represent information related to a specific place/location. When a user performs an action such as throwing a ball in a living room, the place sub-graph may designate the "living room" as a main node, with objects and actions associated with that location connected in a connection structure.

An experience sub-graph may store data reflecting specific experiences or interactions with the user. This experience sub-graph may be further connected to lower-level sub-graphs, such as a play sub-graph, an emotion sub-graph, and the like. For example, an experience involving the user throwing a ball in the living room and issuing a command to the robot may be stored/recorded in the experience sub-graph. The play sub-graph connected to the experience sub-graph may include information/nodes representing "ball throwing," "user command," and "positive feedback."

The companion robot 400 may retrieve the most relevant sub-graph from the knowledge DB based on a feature vector, a causality vector, and a category index. For example, when a user makes a specific gesture accompanied by a command "Bring the ball," the companion robot 400 may generate a feature vector, and perform the retrieval using category indices such as "experience sub-graph" and "play sub-graph."

Referring also to FIG. 3, in operation 331, the companion robot 400 may manage retrieval history information of nodes included in the knowledge graphs in the knowledge DB. The companion robot 400 may record and manage a history of accessing a specific node during the retrieval process. The retrieval history information may include metadata such as access frequency to each node, access time, and relationships with related sub-graphs.

For example, if the user repeatedly issues the command "Bring the ball" to the companion robot 400, the companion robot 400 may repeatedly retrieve the sub-graph containing a node "ball" related to the command, and may record metadata such as retrieval timestamps, access frequency, and associations with feature vectors in the retrieval history information.

In addition, the retrieval history information may be used as a reference for measuring the importance of nodes within a sub-graph. For example, when a specific node (e.g., one representing "positive feedback from a user") is frequently retrieved, the companion robot 400 may determine this specific node as a main node, and may then analyze the causal relationship centered on the node and sub-graph or update the knowledge graph accordingly.

The companion robot 400 may manage the retrieval history information to optimize the relationships among the sub-graphs. For example, when the companion robot 400 repeatedly retrieves the same object in different situations, the companion robot 400 may associate or integrate an existing sub-graph with a newly retrieved sub-graph based on the accumulated retrieval history information.

In operation 332, the companion robot 400 may extract one or more of a forgetting sub-graph or a long-term memory sub-graph from the knowledge graphs, based on the retrieval history information.

A forgetting sub-graph may represent a long-ago user input or a vague memory or recollection from the perspective of a real animal, in relation to an interaction with a user. This sub-graph pertains to interactions that have diminished in relevance over time.

More specifically, the forgetting sub-graph may refer to data which requires reduction, compression, abstraction, or deletion. Such data typically comprises information that has not been recalled for a prolonged period or is no longer essential for current operations. By extracting and managing these unnecessary or low-importance memories, the companion robot 400 may improve the efficiency of the knowledge DB. Consequently, storage associated with the forgetting sub-graph may be minimized.

To determine which data should be classified as a forgetting sub-graph, t he companion robot 400 may analyze the retrieval history information for factors such as a reference frequency of a specific node or a sub-graph, a latest retrieval time, and importance of interaction with the user. Based on this analysis, the companion robot 400 may classify/categorize relatively old data or a sub-graph with a low a usage frequency as the forgetting sub-graph.

For example, when the user has a memory of interacting with a robot about using a certain doll (e.g., doll_2) in the past, but has not referred to or interacted with the doll in a long time, the memory related to "doll_2" may be extracted/designated as a forgetting sub-graph. In such cases, the robot may compress or prune the nodes of the corresponding sub-graph, retaining only important information while eliminating extraneous data.

The companion robot 400 may also simplify or abstract detailed relationships and/or attributes into a memories in a more abstract form. For example, when the user and the companion robot 400 played various games in the living room but did not repeat any specific activity, the sub-graph may be maintained in a simple form such as "played various games in the living room." When two previous sub-graphs, such as "play with a ball" and "play with a doll," exist, the companion robot 400 may consolidate the two sub-graphs into a higher-level sub-graph, such as "play experience" and organize data about lower nodes and connection structures. Through this, the companion robot 400 may efficiently manage the memory space that stores the interaction memories with the user while maintaining the overall meaning.

On the other hand, the long-term memory sub-graph may include data that is repeatedly accessed or has significant meaning over a long period of time during the user interactions. Such sub-graphs may represent concepts such as key experiences or specific memories that are frequently recalled or meaningful to the user over time.

The companion robot 400 may analyze the retrieval history information and construct the long-term memory sub-graph centered on frequently referred/accessed or high-important nodes. For example, when the user repeatedly issues the command "bring the ball" and the robot performs it, nodes associated with "ball" and "play" may be recorded with a high frequency and importance in the retrieval history information. In this case, the companion robot 400 may extract the long-term memory sub-graph centered on these nodes and store the interaction as an important experience with the user.

Also, the companion robot 400 may reduce the storage space required for the long-term memory sub-graphs in the knowledge DB. The storage space may be reduced to efficiently manage the sub-graphs that need to be maintained for a long time. For example, when a sub-graph is repeatedly retrieved without any new contextual meaning, the robot may remove redundant data while preserving core/essential nodes and their connection structures so that the storage space may be optimized by generating independent sub-graphs or restructuring them to higher-level concepts.

In operation 333, the companion robot 400 may request to update a parameter of a model for inferring a causality vector, based on information contained in the long-term memory sub-graph. When repetitive interactions or situations with the user are accumulated over a long period of time, the companion robot 400 may update this model to better predict causality, enabling faster and more accurate responses. Accordingly, the companion robot 400 may be trained with specific action patterns or habits/behaviors of the user and respond quickly to an input of the user.

For example, when the user frequently commands "throw the ball" and the robot consistently responds by picking up the ball and facing the user, such an interaction may be stored/recorded in the long-term memory sub-graph. The companion robot 400 may analyze this data in the long-term memory sub-graph to refine the causality vector inference model, thereby improving its responsiveness to similar future inputs. The parameter update of the model for inferring the causality vector may be analogous to developing habits or proficiency in humans. Once the parameters are updated, the companion robot 400 may reduce/compress the storage space corresponding to the long-term memory sub-graph in the knowledge DB. The storage space may be reduced by summarizing or compressing repeated action patterns, retaining only a simplified structure (e.g., "retrieving the ball") while discarding redundant data.

The causality vector inference model may be deployed on-device within the companion robot 400, or may operate via communication with a server in a cloud-based architecture. Also, the model may be implemented as a large language model (LLM). However, the model is not limited to the described example, and may be implemented as an artificial neural network model trained with a causal world model.

As an example of the model for inferring the causality vector, the causal world model may include a causal graphical model, a structured causal model, and similar frameworks.

The causal graphical model may represent probabilistic relationships between variables based on identified causal relationships/dependencies.

The causal graph model may determine a conditional probability between each variable ($x^i$) and a parent variable ($PA_i$) of the variable to decompose the entire probability distribution. It may represent the causal relationship between variables graphically and mathematically analyze operations of a system based on these relationships.

For example, when $x^1$, $x^2$, ..., $x^d$ are not independent, the entire probability may be described by expressing the relationship between each variable and the parent variable as the conditional probability. Through this, the relationship between variables may be understood in a complex system.

In another example, a structural causal model may represent the relationship between variables structurally and causally. The structural causal model may model values of variables as functional relationships to analyze an effect of a change of each variable on other variables. Transfer function ($p_1^k, p_2^k, p_3^k$) may represent a causal relationship between state variables and actions, and may ensure independence between the state variables.

Unlike general world models, the structural causal model may assume independence between state variables, allowing for a more detailed analysis of complex relationships between the state variables. For example, the effect of changes in a robot arm's position on an object's movement may be analyzed independently.

In operation 240, the companion robot 400 infers a final causality vector for action decision by analyzing both the at least one feature vector and the retrieval result (i.e., the most relevant sub-graph retrieved using the initial causality vector). This forms an organically connected inference structure, where the causality vector contributes to refining the retrieval process and is subsequently refined based on the retrieved sub-graph.

The causality vector represents a set of information generated by the companion robot to express causal relationships between situations and actions. This may be achieved by analyzing interactions with the user and situation data. The causality vector may be expressed as numeric data in a vector form, and may also include semantic data such as text-based situation information.

The causality vector in a vector form is configured to enable the companion robot to digitize the situation data and perform calculations within a specific space. Each causality vector may represent a main/key feature of a given situation, and may be used to infer the relationship between situations in a multidimensional space or as a basis for action decisions. For example, in a situation where the user throws a ball and the robot retrieves the ball, the causality vector may encode information such as [a user's gesture (throwing), a change in the object's position, the robot's action (retrieving the ball)]. The causality vector may serve as an input to a machine learning model or a reinforcement learning algorithm, allowing the robot to predict or determine an appropriate action based on the current situation.

Text information may function as a superordinate concept of information in a vector form that descriptively expresses the situation, enabling the companion robot to develop semantic understanding of situations. For example, a causality vector corresponding to a user command such as "I'll throw the ball, so get it" may include associated text-based information such as "Malvin said he got a doll as a gift. There are a doll_1 on the table_1 in the room_1, and a doll_2 in front of Malvin."

The causality vector may be structured as an integration of the vector-based and text-based information. Rather than serving solely as raw data, the causality vector may include information necessary for the causal inference and action decision-making by the robot.

The companion robot 400 may infer the causality vector by analyzing a spatiotemporal relationship between the at least one feature vector and a specific event extracted from the retrieval result of the knowledge DB, and a relationship with the user. This inference may be performed using the causality vector inference model.

For example, consider a situation where the user points in a specific direction while issuing the command "throw the ball." The companion robot 400 may infer key information representing the situation using sub-graphs corresponding to voice input (the command), image input (the gesture), and prior interactions between the user and the robot.

The companion robot 400 may analyze the time and location at which a specific event occurred, as well as a relationship between associated objects. For example, when the user points to a ball in the living room, the spatiotemporal relationship may be determined based on the location of the ball relative to the designated place, which is the living room.

The companion robot 400 may also infer the relationship based on the knowledge graph, which is existing interaction data about the user commands and corresponding robot actions. When the user has previously issued a similar command and the companion robot 400 has retrieved the ball in response, the robot may identify the relationship by referencing the sub-graph that records the knowledge about this.

The companion robot 400 may derive the causal relationship between events by analyzing the spatiotemporal relationship of a specific event, user input, and information of the sub-graph extracted from the knowledge DB. For example, a causal sequence such as "receiving the user's command, identifying the ball's location, and performing the action of retrieving the ball" may be represented within the causality vector.

Accordingly, the companion robot 400 may infer a causality vector by considering both a spatiotemporal element and a user relationship (i.e., user interaction element). Based on the inferred causality vector, the robot may determine an appropriate action for the situation. For example, the causality vector may serve as the basis for generating an action control signal of "retrieving the ball."

In addition, the causality vector may be used to update the knowledge graph or as information that may be reused in other situations. For example, when a similar situation arises, the companion robot 400 may rely on the previously inferred causality vector to determine an appropriate response.

In operation 250, the companion robot 400 may generate at least one sub-graph corresponding to at least one of the knowledge graphs stored in the knowledge DB, based on the causality vector.

For example, the companion robot 400 may generate a sub-graph using a rule-based method or a training-based inference method.

The rule-based method may include transforming input data into nodes and edges according to predefined rules. For example, in a case that the input states "A is on B," the method may generate nodes A and B and adding an edge labeled "is_on." Similarly, in a case that the input states "C owns D," the method may generate nodes C and D and adding an edge labeled "owns."

The training-based inference method may include utilizing a machine learning-based model, such as a pre-trained natural language processing (NLP) model or a graph neural network (GNN), to automatically infer relationships and generate knowledge graphs. For example, when the user says, "Malvin gave Doll_2 to Sophia," the model may generate nodes " Malvin," "Doll_2," and "Sophia," and add an edge labeled "gave_to." The model may infer from the context that "gave_to" implies a transfer of ownership.

The companion robot 400 may output a action control signal determined based on the causality vector. The companion robot 400 may generate the action control signal using an action decision model, a processor, a controller, or the like, and then perform the corresponding action.

The action decision model may receive the causality vector as input and determine an appropriate action. The causality vector may include data related to the situation, and the action decision model may infer an appropriate action based on the user's request or environment factors. For example, when the causality vector is transmitted in the situation of "get the ball," the action decision model may generate an action signal for retrieving the ball.

The action decision signal may be interpreted by the processor and transformed into an executable instruction. Based on the generated signal, the processor may generate a command to control various components of the robot. For example, a command may be generated to identify the ball's location and determine the robot's arm movement and navigation path. During this process, the processor may further analyze sensor data to refine the command.

The controller may receive the command from the processor and control the robot's hardware accordingly. For example, the controller may move the robot's arm to grasp the ball, and control the robot's legs to perform the action of getting the ball. In addition, the environment may be monitored in real time through the sensors to avoid obstacles and enhance the accuracy of actions.

Once the companion robot 400 completes an action, the resulting data may be stored in the form of the knowledge graph. The knowledge graph may record the action of the robot and a result thereof as structured data, which may be reused in the same or similar situations in the future.

For example, when the sub-graph is generated, the companion robot 400 may output a control signal of "action of getting the ball" and perform the corresponding action accordingly. The sub-graph may then record the action of the robot and a result thereof as structured data for future reference.

The companion robot 400 may also receive user feedback regarding the action of the companion robot 400. Based on this feedback, the companion robot 400 may generate at least one sub-graph. When the user praises the robot by saying "Good job" while petting the robot after retrieving the ball, the companion robot 400 may add an edge labeled "positive interaction" to the sub-graph generated based on the positive feedback, or may strengthen/reinforce the reliability of the sub-graph.

The user feedback input may extend beyond simple positive or negative responses. The companion robot 400 may actively engage with the user by asking questions and receiving responses. For example, the companion robot 400 may ask the user a question such as "Are you referring to the doll (=doll_2) in front of you?" to clarify a specific situation. **If** the user confirms, the companion robot 400 may accurately generate or modify the sub-graph based on the user feedback.

At this stage, the companion robot 400 may be configured to update one or more parameters of the causality vector inference model based on the user feedback. For example, when the user consistently provides negative feedback in response to a specific action, the robot may be trained with this and adjust the model parameters accordingly to recommend an alternative action in the same or similar situations. On the other hand, when positive feedback is repeatedly provided, the corresponding parameters may be reinforced to increase the reliability or confidence associated with the action.

In operation 260, the companion robot 400 may update at least one of the knowledge graphs based on the generated at least one sub-graph.

In an example, the companion robot 400 may integrate the relationships between specific sub-graphs among the knowledge graphs to update the connection structure of nodes (e.g., objects, events, and the like) that are mutually referenced within the specific sub-graphs. Integration of sub-graph relationships may include fusing all sub-graphs into a single structure or updating each connection structure of nodes within each sub-graph.

The companion robot 400 may dynamically assign the generated at least one sub-graph to at least one of the knowledge graphs based on at least one of: an attribute of a node within the generated at least one sub-graph; and/or one or more causality vectors.

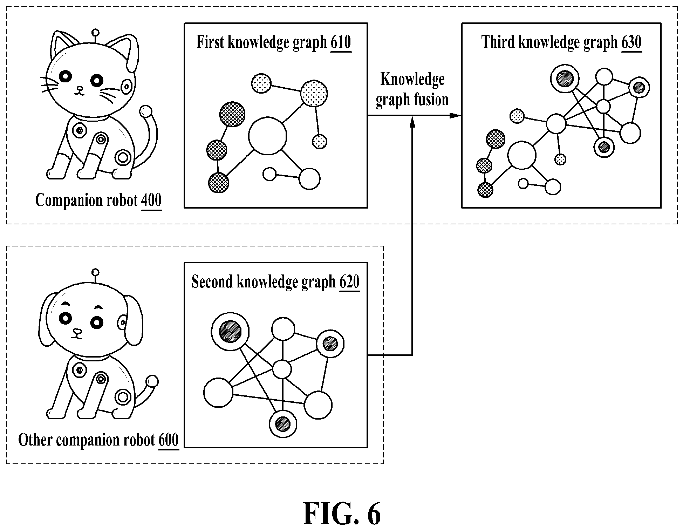

In an example, the operation of receiving the knowledge graph from another companion robot (e.g., the companion robot 600 of FIG. 6) may be described in detail with reference to FIG. 6 to be described below.

FIG. 4 illustrates an example operational flow of a companion robot according to one or more embodiments.

The description provided with reference to FIGS. 1 to 3 may also apply to FIG. 4, and redundant descriptions may be omitted for brevity.

Referring to FIG. 4, the companion robot 400 may execute a universal encoder 410, a knowledge graph retriever 430, a knowledge graph generator 440, and a knowledge graph refiner 450 via the processor. A causal world model 420 may be implemented in the form of an on-device in the companion robot 400 and executed by the processor, and may also communicate with a server to access a cloud-based version of the causal world model 420. The companion robot 400 may include a memory for storing data related to a plurality of knowledge graphs.

The companion robot 400 may receive user input 401, recognize a situation through multi-modal input analysis, infer a causal relationship, and then generate or update a knowledge graph.

The companion robot 400 may transmit input data provided by the user to the universal encoder 410 for analysis. For example, when the user says "I got a doll as a gift. I'm deeply touched " or when an object in the environment is recognized, the universal encoder 410 may process such multi-modal data to generate a feature vector expressed in the same feature space.

The feature vector generated by the universal encoder 410 may be input to the causal world model 420 for comprehensive situation analysis. Based on the input data, the causal world model 420 may infer a causal relationship between objects as a causal structure. For example, when the situation "doll_2 is in front of Malvin" is recognized, a causal link such as "belongs to" may be derived, including that "Human_1 (Malvin) belongs to Doll_2."

The knowledge graph retriever 430 may retrieve relevant graph data in response to a question or a situation request from the user. For example, when the user asks, "Where is Jane doll?", the companion robot 400 may retrieve location information related to "Doll_2" from the knowledge graph, and respond, "The doll is in Room_1 in front of you," or retrieve "Doll_2" from another location. The knowledge graph retriever 430 utilizes the initial causality vector, derived from the causal world model 420, to specify the scope of sub-graph retrieval. By narrowing the search range using the causality vector, the retriever efficiently identifies the most contextually relevant sub-graph from the knowledge DB.

The companion robot 400 may separately manage sub-graphs based on context, such as locations and experiences. For example, a "place sub-graph" may include spatial information such as {Room_1, Table_1, Doll_1}461, and an "experience sub-graph" may store relationship information such as {Human_1(Malvin), Doll_2, belongs to} 462. These sub-graphs may be interlinked depending on the context to facilitate interactive experiences with the user.

The knowledge graph generator 440 may generate objects and relationships in a structured graph format based on situation information provided by the causal world model 420. For example, the knowledge graph generator 440 may generate nodes by extracting key objects from the situation information transmitted from the causal world model 420 using a rule-based or training-based inference model as described above. For example, when the situation information is "Malvin received Doll_2 as a gift. Doll_2 is in front of Malvin," "Malvin," "Doll_2," and "gift" may be recognized as objects and nodes for each may be generated.

The knowledge graph generator 440 may generate edges by analyzing the relationships between objects. For example, an edge labeled "received" may be generated for the relationship "Malvin received Doll_2."

In addition, the knowledge graph generator 440 may enhance the situation information by adding attributes to the generated nodes and edges. For example, attributes such as category=toy and color=red may be added to a node of "Doll_2."

Each object may be represented as a node, and the relationship between objects may be represented as a connection structure (or an edge), thereby generating a graph triple. For example, the relationship "belongs to" between "Malvin" and "Doll_2" may be generated as a new knowledge graph triple {Human_1, belongs to, Doll_2} 460.

The knowledge graph generator 440 may identify an uncertain area and supplement the graph through user feedback (human feedback). For example, when the robot may request confirmation to the user through a question such as "Are you talking about the doll in front of you?" and the user responds "Yes," the corresponding knowledge graph may be supplemented and updated based on the information.

The new graph triple generated by the knowledge graph generator 440 may be compared and fused with an existing knowledge graph through the knowledge graph refiner 450. For example, when there is an object "Doll_1 (Tom)" in the existing graph and information related to the newly generated object "Doll_2 (Jane)" is added, a new connection structure of "Doll_2 belongs to Human_1 (Malvin)" may be established.

The knowledge graph refiner 450 may also reduce unnecessary or redundant information and update the sub-graph during the knowledge graph fusion.

The knowledge graph refiner 450 may confirm whether the newly generated graph triple already exists in the existing knowledge graph. For example, in a case where the new knowledge graph triple 460 of "Human_1 (Malvin) belongs to Doll_2" already exists in the existing knowledge graph, it may be determined as redundant data and ignored during the updated.

The knowledge graph refiner 450 may prioritize the latest data or merge the attributes when the attributes of an existing relationship and a new relationship are different. Newly introduced objects (nodes) or connection structures (edges) may be integrated with the existing graph. For example, when the user talks about "Doll_2" and connects it to "Malvin," a new node "Doll_2" may be connected to a node "Malvin" in the existing graph via an edge labeled "belongs to." During this process, the connections between the place sub-graph and the experience sub-graph may also be updated.

For example, when new information of "Doll_2 is in front of Malvin" is added while "Room_1 contains Table_1 and Doll_1" is stored in the existing place sub-graph, the new node "Doll_2" may be connected to Room_1 and at the same time the new relationship of "belongs to Malvin" may be added to the experience sub-graph.

When multiple relationships are added around the same object, the knowledge graph refiner 450 may merge or optimize the relationships. For example, when "Doll_1 (Tom)" and "Doll_2 (Jane)" are both connected to "Malvin," the knowledge graph refiner 450 may merge the relationships into an abstract form such as "Malvin owns multiple dolls."

The knowledge graph refiner 450 may add a new nonredundant relationship to the existing graph. For example, when a relationship "Giver_Sophia" which is new information related to "Doll_2" appears, the companion robot 400 may generate a graph triple of "Doll_2 - given by - Sophia" and add the graph triple to the experience sub-graph.

In addition, the knowledge graph refiner 450 may further request the user feedback when uncertainty exists. When a new graph triple is ambiguous before it is fused, the companion robot 400 may request the confirmation to the user. For example, the user feedback may be collected through a question such as "Are you talking about the doll in front of you?" Based on the user's response, accurate nodes and relationships may be generated.

FIG. 5 illustrates an example universal encoder according to one or more embodiments.

The description provided with reference to FIGS. 1 through 4 may also apply to FIG. 5, and any repeated description related thereto may be omitted.

Referring to FIG. 5, the companion robot 400 may receive multi-modal input (e.g., voice, image, and/or touch sensation/tactile data), process the input via each tokenizer (e.g., an audio tokenizer, image tokenizer, or touch sensor tokenizer), and then generate corresponding multi-sensor tokens (e.g., a multi-audio token, multi-image token, and multi-touch sensor token) using the universal encoder 410. The multi-sensor tokens may then be input into the causal world model 420 to infer the causal relationship for the situations and provide information necessary for the action decision by the robot. The universal encoder 410 may comprehensively process the tokens input from each tokenizer by mapping the tokens to the same feature space. The universal encoder 410 may be implemented as an artificial neural network model trained to aggregate tokens of each modality and combine multi-sensor information to output multi-sensor tokens that represent a single situation.

The audio tokenizer may tokenize voice data to generate an audio token. The audio token may be input to the universal encoder 410 and integrated with the output of the universal encoder 410 to be transformed into a multi-audio token. The multi-audio token is a feature vector that represents the user's verbal expression (e.g., voice command and/or utterance of the user), and may include linguistic information, emotional tone, intonation, and the like. The causal world model 420 may understand/interpret the language of the user by analyzing the multi-audio token. For example, when the user says, "Throw the ball," the causal world model 420 may interpret this language as a verbal command.

The image tokenizer may tokenize image data to generate an image token. The image token may be input to the universal encoder 410 and integrated with the output of the universal encoder 410 to generate a multi-image token. The multi-image token may be a feature vector including visual information such as hand gestures, facial expressions, and surroundings of the user. The causal world model 420 may recognize/interpret the hand gestures, facial expressions, and surroundings of the user by analyzing the multi-image token. For example, when the user smiles or points in a specific direction, the causal world model 420 may recognize this visual information and infer user's intent from this visual context, thereby determining the situation.

The touch sensor tokenizer may tokenize touch sensor data to generate a touch sensor token. The touch sensor token may be input to the universal encoder 410 and integrated with the output of the universal encoder 410 to generate the multi-touch sensor token. The multi-touch sensor token may be a feature vector including sensory information representing a strength/intensity, pattern, and location of a user's touch. The causal world model 420 may understand/interpret the physical interaction by analyzing the multi-touch sensor token. For example, when the user gently pets or taps the robot, the causal world model 420 may reflect the sensory information by registering the physical interaction as positive or affectionate.

FIG. 6 illustrates an example operation of receiving a knowledge graph from another companion robot according to one or more embodiments.

Referring to FIG. 6, the companion robot 400 may receive one or more knowledge graphs (e.g., a second knowledge graph 620) formed by another companion robot 600, based on a user request. The second knowledge graph 620 may be received in its entirety or a portion thereof may be received selectively, based on user input or specific conditions For example, when the user requests only a specific interaction history or memory, only a corresponding portion of a graph (e.g., the second knowledge graph 620) may be filtered and transferred.

**In** one or more embodiment, the companion robot 400 may incorporate nodes or connection structures from the second knowledge graph 620, which represent interaction history between the user and the other robot 600, into its own knowledge graphs.

For example, the companion robot 400 may fuse the second knowledge graph 620 into its own knowledge graphs (e.g., a first knowledge graph 610) with minimal modification or store the second knowledge graph 620 separately as a third knowledge graph 630, based on user request or preference.

In one or more embodiments, the companion robot 400 may store information (e.g., a nodes and/or a connection structure) from the second knowledge graph 620 as historical knowledge within the first knowledge graph 610, preserving the corresponding node and/or connection structure.

For example, the companion robot 400 may fuse the received second knowledge graph 620 with the first knowledge graph 610 in a form of "memories of a previous life" or "memories with mother" as nonlimiting examples. As described above, the companion robot 400 may store the received knowledge graph in a form of a long-term memory and/or request to update the parameter of the causal world model based on this transferred data.

More specifically, the companion robot 400 may reflect the user interaction history included in the received second knowledge graph 620 to its own first knowledge graph 610. For example, when the other companion robot 600 includes a memory of "play experience with the user," this information may be integrated into its own experience sub-graph as past knowledge. The integration process may involve minimal structural modification of the existing knowledge graph by adding or updating nodes and connection structures as necessary.

The second knowledge graph 620 may be designated as "memories of a previous life," "memories of the past," or categorized under a similar semantic label. For example, when the companion robot 400 receives information of "play experience with the ball" from the other companion robot 600, this information may be reflected in the first knowledge graph 610 in the form of "play experience in a previous life."

During the integration process, the companion robot 400 may compare nodes and edges of the second knowledge graph 620 with existing data of the first knowledge graph 610 to identify duplicate or similar nodes and resolve duplications. For example, when the node "ball" of the second knowledge graph 620 already exists in the first knowledge graph 610, the system may add an edge connected to the existing node without generating a new node (i.e., duplicating the node). An attribute such as "origin=previous_robot" may be appended to indicate the origin/source of the newly generated connection structure.

The companion robot 400 may distinguish the transferred data in the second knowledge graph 620 from the existing data by appending metadata attributes such as "origin=previous_robot" to the associated nodes and edges.

The companion robot 400 may request the causal world model to process the received knowledge graph differently or to update the parameter of the causal world model. For example, the causal world model may process the data with the attribute "origin=previous_robot" differently from normal data. The received knowledge graph may be used only at the reference level, thereby minimizing its impact/influence on the causality vector inference of the causal world model.

In addition, according to the user request, the other companion robot 600 may be designated as a "mother robot," and its knowledge graphs may be stored and categorized into a specific topic or experience such as "memories with mother." In this process, each memory may be managed as an independent sub-graph to avoid collisions or redundancy with existing graphs or data structures.

In one or more embodiments, the received second knowledge graph 620 may be stored in the form of a long-term memory sub-graph. The long-term memory sub-graph may represent repetitive or important past interactions with the user, and may later be used for the training of the causal world model or the situation determination.

The companion robot 400 may update the causal world model's parameters using the information of the received second knowledge graph 620. For example, in a case that the other companion robot 600 has learned to retrieve a ball in response to a user throwing it, such experiential data may be used to reinforce the training of the causal world model, allowing the companion robot 400 to replicate or adapt similar behaviors in future interactions.

FIG. 7 illustrates an example electronic device according to one or more embodiments.

The description provided with reference to FIGS. 1 through 6 may also apply to FIG. 7, and any repeated description related thereto may be omitted.

Referring to FIG. 7, an electronic device 700 may include one or more processors 730, a memory 750, and an output device 770 (e.g., a display). These components may be interconnected via a communication bus 705. The processors 730 may be configured to perform one or more of the methods described herein or an algorithm corresponding to such methods, for operating the electronic device 700.

The output device 770 may display a user interface for controlling the companion robot (e.g., the robot 400 in FIG. 6), as managed by the processors 730. The output device 770 may be the same device as the display included in the electronic device 700. Additionally, the output device 770 may be integrated into the electronic device 700 to display the user interface or implemented as an external display device.

The memory 750 may store data related to methods of controlling the companion robot performed by the processor 730. Further, the memory 750 may store intermediate and final results generated by the processors 730 described above. In addition, the memory 750 may store various datasets and programs. The memory 750 may be implemented as volatile or non-volatile memory, and may include high-capacity storage medium media, such as a hard disk.

The processor 730 may perform one or more of the methods described above with reference to FIGS. 1 through 4, or corresponding algorithms. The processor 730 may be a hardware-implemented data processing device including circuits designed to execute desired operations, including executing codes or instructions. Non-limiting examples of the processors 730 include a central processing unit (CPU), a graphics processing unit (GPU), a neural network processing unit (NPU), a microprocessor, a processor core, a multi-core processor, a multiprocessor, an application-specific integrated circuit (ASIC), and/or a field-programmable gate array (FPGA).

The processor 730 may execute program code stored in the memory 750 and control the overall operations of the electronic device 700 based on the said code.

The electronic devices, sensors, processors, memories, storage devices, robots, models and interfaces, communication buses, robot 400/600, user input 401, encoder 410, model 420, generator 440, refiner 450, retriever 430, storage 461/462, processor 730, memory 750, output device 770, and other apparatuses, devices, models, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents as defined by the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Compared with conventional robot control systems that may react to single-modality inputs or rely on static data stores, embodiments of the present invention provide one or more of the following distinguishing features and/or advantages.

Embodiments can provide integrated multimodal encoding with causal inference. Unlike approaches that process voice or vision independently, the universal encoder aggregates different modalities into a common feature space and, together with a causal world model, infers a causality vector that reflects spatiotemporal context and the user relationship. This enables action decisions that are sensitive to context rather than keyword triggers alone.

Embodiments can provide dynamic knowledge graph generation and refinement. Rather than merely logging interaction data, the system generates sub-graphs from the causality vector and integrates them into existing knowledge graphs, including by strengthening or pruning connections based on retrieval history and explicit user feedback.

Embodiments can provide memory lifecycle management. The system manages forgetting sub-graphs and long-term memory sub-graphs derived from retrieval history, enabling selective abstraction, compression, or retention of interaction knowledge over time.

Embodiments can provide cross-robot knowledge transfer. Such embodiments enable receiving and fusing knowledge graphs from another companion robot, thereby transferring interaction histories and allowing a replacement or additional robot to provide services aligned with prior user experiences without repeating an initial setup.

Embodiments can provide improved intent recognition accuracy. By fusing heterogeneous inputs in a single feature space, the system may reduce misclassification caused by ambiguous single-modality signals (e.g., quiet speech accompanied by a clear gesture), thereby supporting more reliable action selection.

Embodiments can provide responsive and personalized control. The use of the causality vector, together with dynamic sub-graph generation and graph refinement, enables rapid adaptation to user-specific patterns over time and supports consistent responses in recurring contexts.

Embodiments can provide resource-efficient memory management. Extraction of forgetting and long-term memory sub-graphs allows pruning or abstraction of low-value data while retaining essential structures, which may reduce storage footprint and retrieval cost.

Embodiments can provide continuity across devices. Fusion of knowledge graphs from another robot can reduce or avoid cold-start behavior during device replacement, supporting immediate continuity of service.

Embodiments can provide hybrid on-device and/or server execution. In server-coupled embodiments, offloading at least part of the causality inference and/or retrieval may alleviate on-device compute load, while on-device embodiments may reduce network dependency; both approaches can be configured to maintain real-time action control.

In addition to the above disclosure, all variations, and their equivalents, within the scope of the claims are to be construed as being included in the disclosure.

## Claims

1. A processor-implemented method, the method comprising:

   receiving a multi-modal input signal from a user;
   extracting, using a universal encoder, at least one feature vector from the multi-modal input signal, wherein the universal encoder maps information on different modalities to a same feature space;
   retrieving a knowledge database, DB, comprising a plurality of knowledge graphs based on the at least one feature vector, wherein the plurality of knowledge graphs comprises at least one knowledge graph that accumulates experience data associated with the user;
   inferring a causality vector for determining an action of a companion robot based on the at least one feature vector and a retrieval result of the knowledge DB;
   generating at least one sub-graph corresponding to the at least one knowledge graph based on the causality vector; and
   updating the at least one knowledge graph based on the generated at least one sub-graph.

2. The method of claim 1, further comprising:

   managing retrieval history information of nodes included in the plurality of knowledge graphs within the knowledge DB,
   optionally extracting at least one of a forgetting sub-graph or a long-term memory sub-graph from the plurality of knowledge graphs based on the retrieval history information,
   optionally updating a parameter of a causality vector inference model based on the long-term memory sub-graph,
   optionally reducing a storage space corresponding to the forgetting sub-graph and the long-term memory sub-graph in the knowledge DB.

3. The method of any one of the preceding claims, wherein the generating of the at least one sub-graph comprises outputting an action control signal for the companion robot based on the causality vector.

4. The method of any one of the preceding claims, wherein the generating of the at least one sub-graph comprises:

receiving a user feedback related to the action performed by the companion robot; and generating the least one sub-graph based on the user feedback,

optionally updating a parameter of a causality vector inference model based on the user feedback.

5. The method of any one of the preceding claims, wherein the updating of the at least one knowledge graph comprises integrating relationships between specific sub-graphs within the plurality of knowledge graphs, and updating a connection structure of nodes mutually referred among the specific sub-graphs.

6. The method of any one of the preceding claims, wherein the extracting of the at least one feature vector comprises tokenizing each modality included in the multi-modal input signal to generate tokenized inputs,

optionally wherein the extracting of the at least one feature vector further comprises applying weights to the tokenized inputs based on correlations and reliability among the tokenized inputs.

7. The method of any one of the preceding claims, wherein the retrieving of the knowledge DB comprises matching a corresponding sub-graph to the at least one feature vector using a category index assigned to each sub-graph of the plurality of knowledge graphs.

8. The method of any one of the preceding claims, wherein the inferring of the causality vector comprises analyzing a spatiotemporal relationship between the at least one feature vector and a specific event extracted from the retrieval result of the knowledge DB, and a relationship with the user, using a causality vector inference model.

9. The method of any one of the preceding claims, wherein the updating of the at least one knowledge graph comprises dynamically assigning the generated at least one sub-graph to the at least one knowledge graph based on at least one of an attribute of a node within the generated sub-graph or the causality vector.

10. The method of any one of the preceding claims, further comprising:

in response to a request from the user, receiving one or more knowledge graphs formed by another companion robot, and fusing the plurality of knowledge graphs with the one or more knowledge graphs,

optionally wherein the fusing of the plurality of knowledge graphs with the one or more knowledge graphs comprises reflecting a node or a connection structure corresponding to an interaction history with the user, included in the one or more knowledge graphs of the other companion robot, to the plurality of knowledge graphs, optionally wherein the reflecting of the node or the connection structure to the plurality of knowledge graphs comprises reflecting the node or the connection structure as past knowledge within the plurality of knowledge graphs.

11. The method of any one of the preceding claims, wherein the retrieving of the knowledge DB comprises deriving an initial causality vector from the feature vector using a causal world model, and narrowing a retrieval scope of the knowledge DB based on the initial causality vector.

12. A non-transitory computer-readable storage medium storing code that, when executed by one or more processors, configures the one or more processors to perform the method of any one of the preceding claims.

13. A companion robot comprising:
one or more processors configured to:

receive a multi-modal input signal from the user;
extract at least one feature vector from the multi-modal input signal using a universal encoder that maps information on different modalities to a same feature space;
retrieve, from the memory, a knowledge database, DB, comprising the plurality of knowledge graphs based on the at least one feature vector;
infer, using a causal world model, a causality vector for determining an action of the companion robot based on the at least one feature vector and a retrieval result of the knowledge DB using a causal world model;
generate at least one sub-graph corresponding to at least one of the plurality of knowledge graphs based on the causality vector; and
update the at least one of the plurality of knowledge graphs based on the generated at least one sub-graph.

14. A companion robot communicatively coupled to a server, the companion robot comprising:
one or more processors configured to:

receive a multi-modal input signal from the user;
extract at least one feature vector from the multi-modal input signal using a universal encoder that maps information on different modalities to a same feature space;
retrieve, from the memory, a knowledge database (DB) comprising the plurality of knowledge graphs based on the at least one feature vector; transmit the at least one feature vector and a retrieval result of the knowledge DB to the server;

receive, from the server, a causality vector for determining an action of the companion robot; generate at least one sub-graph corresponding to at least one of the plurality of knowledge graphs included in the knowledge DB based on the causality vector; and

update the at least one of the plurality of knowledge graphs based on the generated at least one sub-graph.

15. The companion robot according to any one of the preceding two claims, wherein the one or more processors are further configured to perform the method of any one of the preceding claims.

| | | | |
|---|---|---|---|
| Companion robot customizable by user 101 | Self-evolving communication skills 102 | Life-long experience accumulation 103 | Transferrable experience and knowledge 104 |

**FIG. 1**

```
                          ┌─────────────────┐
                          │      Start       │
                          └─────────────────┘
                                   │
                                   ▼                        ┌─ 210
        ┌──────────────────────────────────────────────────────────┐
        │        Receive multi-modal input signal from user          │
        └──────────────────────────────────────────────────────────┘
                                   │
                                   ▼                        ┌─ 220
        ┌──────────────────────────────────────────────────────────┐
        │   Extract at least one feature vector from multi-modal input signal using  │
        │  universal encoder that maps information on different modalities to same feature space │
        └──────────────────────────────────────────────────────────┘
                                   │
                                   ▼                        ┌─ 230
        ┌──────────────────────────────────────────────────────────┐
        │      Retrieve knowledge DB including plurality of knowledge graphs    │
        │                based on at least one feature vector                │
        └──────────────────────────────────────────────────────────┘
                                   │
                                   ▼                        ┌─ 240
        ┌──────────────────────────────────────────────────────────┐
        │   Infer causality vector for determining action of companion robot based on │
        │        at least one feature vector and retrieval result of knowledge DB      │
        └──────────────────────────────────────────────────────────┘
                                   │
                                   ▼                        ┌─ 250
        ┌──────────────────────────────────────────────────────────┐
        │  Generate at least one sub-graph corresponding to at least one of plurality of │
        │       knowledge graphs included in knowledge DB based on causality vector      │
        └──────────────────────────────────────────────────────────┘
                                   │
                                   ▼                        ┌─ 260
        ┌──────────────────────────────────────────────────────────┐
        │        Update at least one of plurality of knowledge graphs based on       │
        │                   generated at least one sub-graph                 │
        └──────────────────────────────────────────────────────────┘
                                   │
                                   ▼
                          ┌─────────────────┐
                          │       End        │
                          └─────────────────┘
```

## FIG. 2

```
                        ┌─────────────┐
                        │    Start    │
                        └──────┬──────┘
                               │                        ╱ 331
        ┌──────────────────────▼──────────────────────────┐
        │ Manage retrieval history information of nodes included in │
        │   plurality of knowledge graphs within knowledge DB      │
        └──────────────────────┬──────────────────────────┘
                               │                        ╱ 332
        ┌──────────────────────▼──────────────────────────┐
        │ Extract at least one of forgetting sub-graph or long-term memory sub-graph of │
        │  plurality of knowledge graphs based on retrieval history information          │
        └──────────────────────┬──────────────────────────┘
                               │                        ╱ 333
        ┌──────────────────────▼──────────────────────────┐
        │ Request to update parameter of model for inferring causality vector │
        │        based on long-term memory sub-graph                 │
        └──────────────────────┬──────────────────────────┘
                               │
                               ▼
                            To 240
```

# FIG. 3

400

**User input 401**

"I got a doll as a gift. I deeply touched."

Situation recognition

**Situation**
Malvin said he got a doll as a gift. There are a doll_1 on the table_1 in the room_1, and adoll_2 in front of Malvin.

Universal encoder 410

Causal world model 420

**Knowledge graph generator 440**

Information extraction

Graph triple extraction

User feedback

"Are you talking about the doll in front of you?"
"Yes"

Human_1 (Malvin)

belongs to

Doll_2

New knowledge graph triple 460

**Knowledge graph refiner 450**

Knowledge graph fusion

Knowledge graph reduction

**Knowledge graph retriever 430**

Retrieval -augmented generation

**Memory-knowledge graph storage**

**Sub-graph (place)**

Home

461

Floor_1    Floor_2

Room_1    Room_2

Table_1

Cup_1    Doll_1

**Sub-graph (experience)**

462

Human_1 (Malvin)

belongs to    likes    belongs to

Doll_2    Wine    Doll_1 (Tom)

**FIG. 4**

**FIG. 5**

First knowledge graph 610

Companion robot 400

Knowledge graph fusion

Third knowledge graph 630

Second knowledge graph 620

Other companion robot 600

FIG. 6

700

730

705

One or more
processors

770

Output device

750

Memory

FIG. 7

| | Europäisches Patentamt |
| European Patent Office |
| Office européen des brevets |

**EUROPEAN SEARCH REPORT**

Application Number

EP 25 20 1706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/386015 A1 (CRABTREE JASON [US] ET AL) 21 November 2024 (2024-11-21) * abstract * * paragraph [0026] - paragraph [0044] * * paragraph [0090] - paragraph [0423]; figures 1-39 * ----- | 1-15 | INV. G06N5/022 G06N5/04 G06N20/00 |
| A | PELLER-KONRAD FABIAN ET AL: "A memory system of a robot cognitive architecture and its implementation in ArmarX", ROBOTICS AND AUTONOMOUS SYSTEMS, ELSEVIER BV, AMSTERDAM, NL, vol. 164, 22 March 2023 (2023-03-22), XP087303311, ISSN: 0921-8890, DOI: 10.1016/J.ROBOT.2023.104415 [retrieved on 2023-03-22] * abstract * * chapters 1-7; page 1 - page 18; figures 1-19 * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 12 December 2025 | Hasnas, Sergiu |

EPO FORM 1503 03.82 (P4C01)

## ANNEX TO THE EUROPEAN SEARCH REPORT
## ON EUROPEAN PATENT APPLICATION NO.

EP 25 20 1706

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | Publication date | Patent family member(s) | Publication date |
|---|---|---|---|
| US 2024386015 A1 | 21-11-2024 | NONE | |

For more details about this annex : see Official Journal of the European Patent Office, No. 12/82